# EUROPEAN PATENT APPLICATION

(11) **EP 2 423 533 A1**
(43) Date of publication of application: **29.02.2012**
(21) Application number: 11170928.3
(22) Date of filing: 22.06.2011
(51) Int. Cl.: F16F 9/36

(54) **Damper**

(30) Priority: 22.06.2010 IT MI20101126
(71) Applicant: Caimi Export S.P.A., 22060 Novedrate CO (IT)
(72) Inventor: Caimi, Adele, 22060 NOVEDRATE (COMO) (IT)
(74) Representative: Ponchiroli, Simone

(57) **Abstract**

A damper was made for damping the opening and closing actions of sliding elements of pieces of furniture, such as wings or drawers, in which a cylindrical housing (2) houses a piston (7) which moves in such a way that it is fixed to a rod (8). A sealing device (9) is present, equipped with a closing element (10), a sealing gasket (13), positioned inside the housing (2) and comprising a portion (14) acting on the rod (8) to prevent fluid from being drawn towards the outside and a retaining element (15) operating in conjunction with the housing (2) and acting on the sealing gasket (13) to hold it in the operating position.

## Description

This invention relates to a damper, in particular a damper for pieces of furniture, such as sliding wings of pieces of furniture, drawers, sliding partition walls and the like.

In detail, one or more dampers according to the invention are suitable for being interposed between the fixed structure of the piece of furniture and the sliding wing so as to suitably dampen the opening/closing forces and limit the impacts of the mobile body on the respective jamb.

There are various types of prior art dampers on the market, specifically intended for the domestic use mentioned.

Such devices usually have a cylinder filled with oil in which a suitable piston moves by sliding, guided by a respective rod.

The oil, leaking between the surfaces of the piston and the cylinder offers a resistance which opposes the motion and generates a damping force which opposes that of the motion of the mobile body. This effect guarantees good damping, mainly when a wing is being closed.

To optimise damping performance pistons have spread whose geometry allows the damping effect to be guaranteed, but also more rapid and efficient rearming in such a way as to be able to guarantee operation even in the case of rapid opening/closing operations.

A prior art type of that configuration is described in patent US 4877115. Obviously, to guarantee optimum operation as time passes, all of the dampers must be sealed and must not allow even minimal oil leaks or the damping performance will rapidly deteriorate. However, the fluid-tight seal, in particular at the zone where the rod passes is often problematic.

The reciprocating motion of the rod, part of which enters and exits the cylinder, inevitably tends to lose oil and in any case to create dynamic seal problems in devices which are vice versa structurally quite simple.

Added to that are the construction tolerances, but above all the assembly tolerances, which are much more difficult to control.

Obviously even small offsets or misalignments during assembly cause, due to the weight of the wings and therefore the extent of the stresses on the damper, the generation of deformations and concentrated forces which are difficult to predict at the design stage.

The above often means that during each operating cycle the behaviour of the elements which should guarantee the seal is not optimum and small (sometimes imperceptible) oil leaks occur.

However, this very quickly results in the loss of efficiency of the damping effect (even for example due to the presence of air bubbles in the liquid which reduce the capacity for energy dispersal).

In any case, even only occasional small leaks after a few operating steps generate a substantial loss of the damping capacity of the device which vice versa should guarantee effectiveness at least comparable to that of the other components of the product.

The use of two or more gaskets, having quite complex sealing geometries, in some situations has allowed the above-mentioned problem to be overcome. However, currently the need is acutely felt for a damper with low costs and simple structure which can allow a good operating life without causing problems linked to oil leaks to the outside resulting in rapid deterioration in performance. The main aim of this invention is to provide a damper able to overcome the problems encountered.

A further aim of the invention is to provide a device with simple design which however demonstrates significant seal reliability, particularly without noticeably increasing the production and/or assembly costs.

Yet another aim of the invention is to guarantee compliance with the dimensions of dampers currently in use, so as to allow, if necessary, the substitution of previous gen\eration dampers which are now discharged or faulty.

According to a first independent aspect, a damper is provided for damping the opening and closing actions of sliding elements of furniture, such as wings or drawers, comprising a housing (2) extending along a longitudinal axis (3) between a first and a second end portion (4, 5), the housing comprising a tubular sliding seat (6), a predetermined quantity of a liquid, such as oil, for example silicone oil, placed inside the tubular sliding seat (6), at least one piston (7) able to slide in the seat for dividing the housing (2) into two sub-chambers, during the motion from the first end portion (4) to the second end portion (5) the transit openings between the two half-chambers being mainly blocked to slow the passage of the liquid and to create a damping effect, during the motion from the second end portion (5) to the first end portion (4) the transit openings being mainly open to allow the facilitated passage of the liquid and to allow more rapid rearming of the damper, a rod (8) substantially fixed to the piston (7) during its sliding motion in the seat (6), the rod (8) at least partly coming out of the first end portion (4) of the housing, at least one sponge (42) housed in the housing (2) at the second end portion (4), said at least one sponge being in particular hollow to allow the sliding transit of the rod (8) inside it, the sponge (42) compensating for changes in the internal volume caused by the motion of the rod (8) into/out of the seat, at least one pierced disk (41) housed in the housing (2) at the first end portion (4) and designed to allow the passage of oil and to hold in position said at least one sponge (42), the sponge (42) being interposed between the disk (41) and the first end portion (4), a sealing device (9) prepared for sealing the sliding seat (6) at the first end portion (4) of the housing (2) to prevent fluid from leaking from the inside of the sliding seat to the outside, the sealing device (9) comprising: at least one closing element (10) having a head (11) with a central seat (12) designed to house and allow the passage of the rod (8) and a lateral flange (26) connected to the head (11) and irremovably and with a fluid-tight seal coupled at the first end portion (4) of the housing (2), at least one sealing gasket (13), positioned in the housing (2) and equipped with a portion (14) acting on the rod (8) for preventing fluid from leaking to the outside, the active portion (14) being elastically abutted to the rod (8) and designed in longitudinal section to have a tab shape with its axis set at an angle to the axis of the rod (8), a base end (23a) of the tab being distanced from the rod (8); and a retaining element (15) operating in conjunction with the housing (2), in particular directly operating in conjunction with the inner surface of the housing (2), and acting on the sealing gasket (13) to hold it in the operating position, the sealing gasket (13) also comprising a locking portion (21) interposed, in operating conditions, between the closing element (10) and the retaining element (15) in such a way as to form a packed condition designed to hold in position, at least along the direction of the longitudinal axis (3), the sealing gasket (13), the locking portion (21) being formed by a disk-shaped portion, optionally having constant thickness, an outer lateral surface of the disk-shaped locking portion (15) acting directly on the inner lateral surface of the housing (2) to prevent oil leakage.

In a second aspect according to the first aspect a damper is provided in which the retaining element (15) has a base (16) designed to operate in conjunction with a corresponding undercut (17) of the damper positioned inside the tubular sliding seat (6) and associated with the housing (2) for determining a resting condition and preventing a translation of the retaining element (15) from the first end portion (4) towards the second end portion (5), the base (16) comprising a substantially flat annular surface facing towards the second end portion (5) designed to form a resting and contact surface for the sponge (42), the base being hollow at the centre, distanced from and not in contact with the rod (8).

In a third aspect according to the first or second aspect a damper is provided whose housing (2) comprises, at the first end portion (4), a first cross-section whose area is greater than a second cross-section relating to a zone (18) consecutive to and following the first end portion (4) towards the second end portion (5). Said difference in cross-section forming the above-mentioned undercut (17). The first cross-section having an area equal to the area of the housing (2) infeed opening in the first end portion (4). The first cross-section with the greater area having a cylindrical internal shape, from the mouth of the housing (2) to the undercut (17).

In a fourth aspect according to the second aspect, a damper is provided in which the retaining element (15) comprises a thrust portion (19) emerging away from the base portion (16), at least the base portion (16) and/or the thrust portion (19) comprising a contact surface (16a, 19a) designed to press, in operating conditions, against a respective contact surface (13a) of the sealing portion (13). The base portion (16) having a substantially cylindrical extension, forming a disk-shaped portion and comprising a central through seat (20) designed to allow the passage of the rod (8) and distanced from the rod. The thrust portion (19) emerges from a central zone of the base portion (16) and towards the first end portion (4). The central through seat (20) is formed by the inner surfaces (16b, 19b) of the base portion (16) and the thrust portion (19) operating in conjunction with each other, and is flared towards the closing element (10). The central through seat (20) optionally and mainly has a conical shape which opens towards the first end portion (4).

In a fifth aspect according to any of the foregoing aspects, a damper is provided in which the lateral flange (26) connected to the head (11) comprises a circular lateral surface facing towards and irremovably and with a fluid-tight seal coupled, along substantially the entire extension, to the inner surface of the housing (2), for example by welding or gluing.

In a sixth aspect according to any of the foregoing aspects, a damper is provided in which the gasket (13) comprises the locking portion (21) resting on the contact surface (16a) of the base portion (16) of the retaining element (15) and a joining portion (22) having a cylindrical tubular shape emerging in a radially internal position of the locking portion (21) and resting on the contact surface (19a) of the thrust portion (19) of the retaining element (15), the active portion (14) of the gasket (13) being operatively connected to the joining portion (22). In a seventh aspect according to any of the foregoing aspects, a damper is provided in which the active portion (14) of the gasket (13) comprises, in longitudinal section, at least one deformable tab (23) designed to act by applying pressure on the rod and comprising a free end (23b) elastically abutted to the rod (8), the tab (23) extending from a first end (23a) located a predetermined distance from the rod (8) to the abutted free end (23b), the first end (23a) being interposed between the closing element (10) and the free end (23b), the active portion (14) being housed in the central through seat (20) of the thrust portion (19) of the retaining element (15) and being distanced from and not in contact with the thrust portion (19).

In an eighth aspect according to the sixth aspect, a damper is provided in which the gasket (13) comprises a connecting portion (24) having a disk shape with the axis parallel with the longitudinal axis (3) of extension of the housing (2) for joining one end portion of the joining portion (22) facing towards the first end portion to the first end (23a) of the active portion (14), the connecting portion (24) emerging radially, substantially at a right angle, from the joining portion (22), the connecting portion (24), the joining portion (22) and the active portion (14) forming, in conjunction with each other, a "U"-shaped housing cavity (25) designed to receive a thrust portion (19) of the retaining element (15).

In a ninth aspect according to any of the foregoing aspects, a damper is provided in which the closing element (10) comprises a lateral flange (26) emerging perimetrically from the head (11) and housed in and connected to the housing (2), the lateral flange (26) at least partly surrounding the gasket (13), a distal portion of the lateral flange (26) opposite the head (11) being radially superposed on the thrust portion (19) of the retaining element (15), a section of the joining portion (15) of the sealing gasket (13) being interposed between the lateral flange (26) and the thrust portion (19).

In a tenth aspect according to any of the foregoing aspects, a damper is provided in which the connecting portion (24) comprises a flat upper surface facing towards the head (11) of the closing element (10), said upper surface being slightly distanced from a flat lower surface of the head opposite, and in particular parallel with, the flat upper surface of the connecting portion (24).

In an eleventh aspect according to any of the foregoing aspects, a damper is provided in which the connecting portion (24) also comprises a sealing projection (39) having an annular shape emerging from the flat upper surface. The sealing projection is designed to make contact under pressure with the flat lower surface of the head (11). The distance between the upper surface of the connecting portion (24) and the flat lower surface of the head (11) allowing correct crushing of the annular sealing projection on the flat lower surface of the head (11) for guaranteeing a further seal against oil leaks.

These and other aims described in more detail below are substantially achieved by a damper as described in the appended claims.

Further features and advantages will become more apparent in the detailed description which follows of several non-limiting example embodiments of a damper according to the invention.

The description below refers to the accompanying drawings, in which:
- Figure 1 is a longitudinal section of a first embodiment of a damper;
- Figure 2 is an exploded view of the damper of Figure 1;
- Figure 3 is a longitudinal section of a detail from Figure 1;
- Figures 4 and 7 are longitudinal sections of another two alternative embodiments of a damper;
- Figures 5 and 8 are respectively exploded views of the dampers of Figures 4 and 7;
- Figures 6 and 9 are longitudinal sections of a detail from Figures 4 and 7;

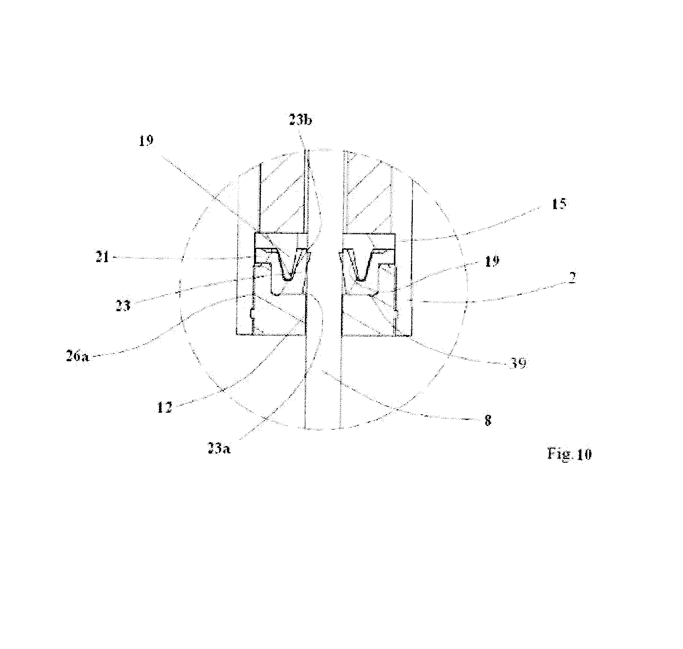

- Figure 10 is a view of a further alternative embodiment of a closing zone of a further damper.

With reference to the accompanying drawings, the numeral 1 denotes in its entirety a damper according to the invention.

In particular the damper described below is particularly suitable for use for wings of pieces of furniture, drawers and the like.

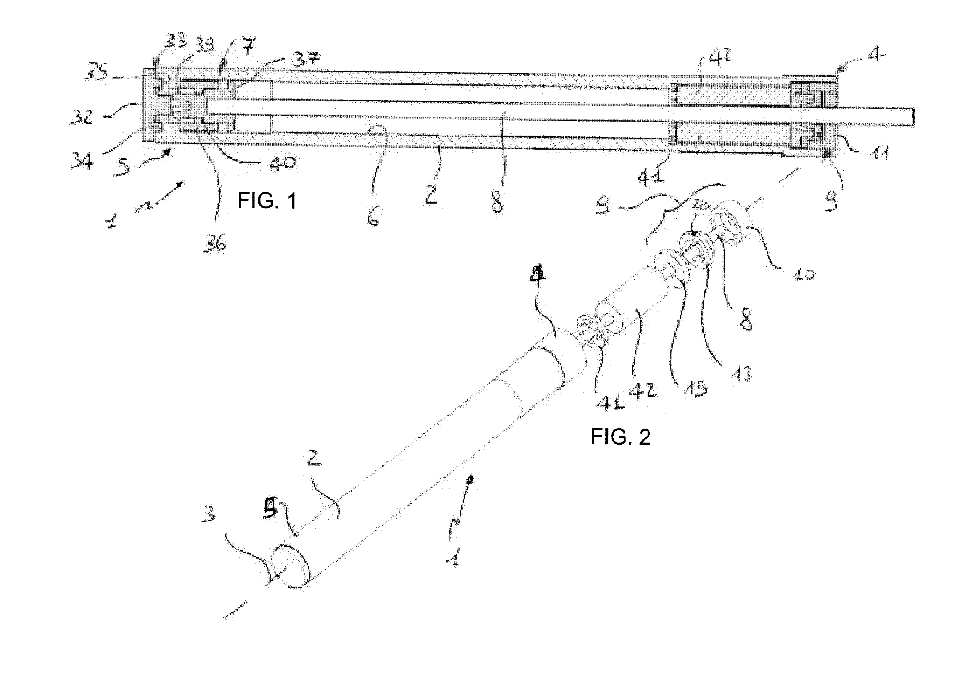

In more detail, the damper described according to one or more of the following aspects is suitable for slowing the opening and/or closing strokes of wings, particularly sliding wings, of wardrobes, walk-in wardrobes, partition walls, etc. As can be seen from the unit in Figure 1, the damper comprises first a housing 2, for example made of plastic material, rigid and extending along a longitudinal axis 3 between a first end portion and a second end portion 4, 5.

The housing has a cylindrical shape (for example with a round cross-section) and may have a substantially constant wall cross-section (thickness).

The housing 2 is open at each of the two end portions 4, 5 in such a way as to form a tubular sliding seat along its entire longitudinal extension.

At the second end portion 5, and in detail relative to said opening, there is a suitable closing cap 32 equipped with an engagement structure 33, for example comprising an annular projection 34 (in the form of teeth in the cross-section illustrated) which engages in a corresponding seat 35 shaped to match, on the second end portion 5 of the housing 2.

The closing cap 2 is irremovably connected to the second end portion 5 in such a way as to form a fluid-tight coupling.

Housed inside the tubular sliding seat 6 there is a suitable sliding piston 7 which can move by translating in the seat 6 between a retracted end of stroke position in which it is close to the second end portion 5 (Figure 1) and an open end of stroke position in which it is instead close to the first end portion 4 of the housing (not illustrated).

The piston moves inside the sliding seat which is in turn filled with a fluid and in particular a liquid such as oil or an oil emulsion.

The fluid, usually oil, is designed to cause a damping of the damper opening/closing motion.

In particular, when the piston is in an intermediate position in the housing 2, the housing is divided into two sub-chambers by the piston itself.

During the piston movement towards one end of stroke or the other, part of the fluid is forced to migrate from one half-chamber to the other through suitable transit openings and/or channels, in this way causing forces on the piston which are directed in the opposite direction to the direction of motion.

From a general viewpoint the piston can adopt two different behaviours, depending if the motion occurs from the first end portion 4 towards the second end portion 5 or vice versa.

In the motion from the first end portion to the second end portion, substantially all of the transit openings between the two half-chambers into which the piston divides the housing are occluded and therefore the fluid (oil) may in general only flow between an outer surface of the piston 7 and the inner part of the housing 2.

In this way, the resistance to the motion of the piston is quite high and the damping effect is more significant.

Vice versa in the motion in the opposite direction the opening of further openings thanks to the particular configuration of the piston promotes the passage of the fluid (oil) in such a way that the motion is easier (with reduced damping) compared with the former situation.

In this way, a damper is obtained which has optimum behaviour during the damping step (closing and motion from the first end portion towards the second end portion), whilst it offers less resistance during opening, allowing decidedly more effective rearming.

In detail, the piston 7 comprises a first mobile body 36 and a second mobile body 37 which can be configured at least in two relative operating positions.

In the first relative operating position, adopted during the closing motion from the first end portion 4 to the second end portion 5, the two bodies are packed together in such a way as to substantially close any transit openings between them, thus only allowing the oil to leak at the outer lateral wall of the first mobile body, that is to say, between the outer lateral part of the latter and the inner lateral wall 30 of the housing.

In the second operating configuration, the transit openings are open and therefore the oil can flow not just between the outer surface of the first body and the housing, but also through the openings created between the first and second mobile bodies 36, 37.

In particular, the first and second mobile bodies 36, 37 are removably coupled to each other, for example in a snap-on fashion, using hooks 39 supported by the second mobile body 37 which act on a suitable contact ring 40 of the first mobile body 36.

The damper also comprises a rod 8 which is irremovably connected to the second mobile body 37, in particular at one of its ends.

The rod, substantially fixed to the piston 7 (that is to say, fixed to the second mobile body 37), also at least partly slides in the seat 6 and at least partly exits the first end portion 4 of the housing.

As already indicated, the rod is partly housed in the housing (and therefore in contact with the damping fluid, that it to say, the oil) and partly located outside the tubular sliding seat 6. Moreover, in the rearming mode, part of the rod contained in the housing must exit it, obviously without generally causing fluid leaks which would result in the discharge of the damper and make it fail to operate. Furthermore, the leakage of oil may lead to the creation of unsightly oily zones which could result in marks or dirtying.

With regard to that, and advantageously, the damper is equipped with a sealing device 9 for sealing the sliding seat 6 at the first end portion 4 of the housing in such a way as to prevent the leakage of fluid from the inside of the sliding seat to the outside.

From a structural viewpoint the sealing device 9 comprises at least three elements: a closing element 10, a sealing gasket 13 and a retaining element 15. The particular configuration of these three elements and the coupling geometry were designed to guarantee an effective seal against leakage.

The closing element 10, or outer cap, comprises an end head 11 having a central seat 12 housing the rod 8 and allowing it to pass with reciprocating motion.

The head 11 is substantially disk-shaped and, from its perimetric portion there emerges cantilever-style a lateral flange 26 in such a way that, in cross-section, the closing element 10 is substantially "C"-shaped, having a hole forming the central seat 12 through which the rod 8 moves.

In general the closing element 10 is made of rigid material, for example, plastic. The flange 26 is usually connected to the cylinder at the first end portion 4, being housed inside the latter and connected to the housing 2. The lateral flange 26 normally at least partly surrounds the sealing gasket 13.

Again with reference to the accompanying drawings, it should be noticed how the cylindrical outer surface of the flange 26 is irremovably connected in a sealed fashion to the inner surface 30 of the housing 2.

Said connection may be obtained by means of gluing, welding or a similar technique.

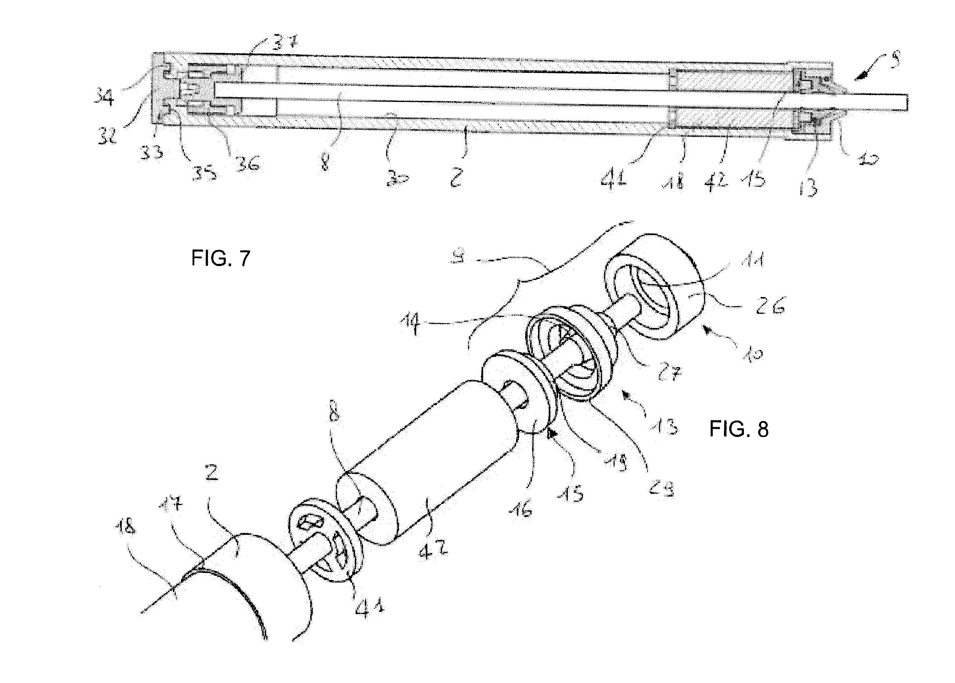

Usually, the head 11 is substantially housed in the housing (but not necessarily, see for example Figure 7) forming a disk-shaped flat outer contact surface.

As already indicated, the sealing device 9 comprises at least one sealing gasket 13, which is positioned inside the housing 2 and is equipped with at least one portion 14 acting on the rod 8 to prevent the leakage of fluid to the outside. Vice versa the retaining element 15 which in particular operates directly in conjunction with the housing 2, acts on the sealing gasket 13 to hold it in the operating position, thus guaranteeing that the latter (an in detail, the active portion 14) performs its function in an optimum way.

Observing the general packed configuration of the three main elements of which the sealing device 9 consists, it may be seen how they are axially and consecutively arranged and interposed relative to each other.

In general, it should be noticed that there is an undercut 17 in the damper. In the embodiment illustrated the undercut is formed by a widening of the cross-section of the end portion 4 of the housing, creating a step having an annular shape, designed to receive a corresponding portion of the retaining element 15 which rests on it, preventing the latter from being inserted in the sliding seat 6 beyond the undercut 17 (the undercut 17 acts as a stop element).

Obviously, an undercut 17 could also be obtained with a suitable added element or with a geometric configuration other than an enlarged cross-section (for example, an inner rib, annular or not).

In any case, the retaining element 15 comprises a base 16 which operates in conjunction (at the perimeter) with the undercut 17 and causes the above-mentioned resting which prevents translation of the retaining element 15 from the first end portion 4 towards the second end portion 5.

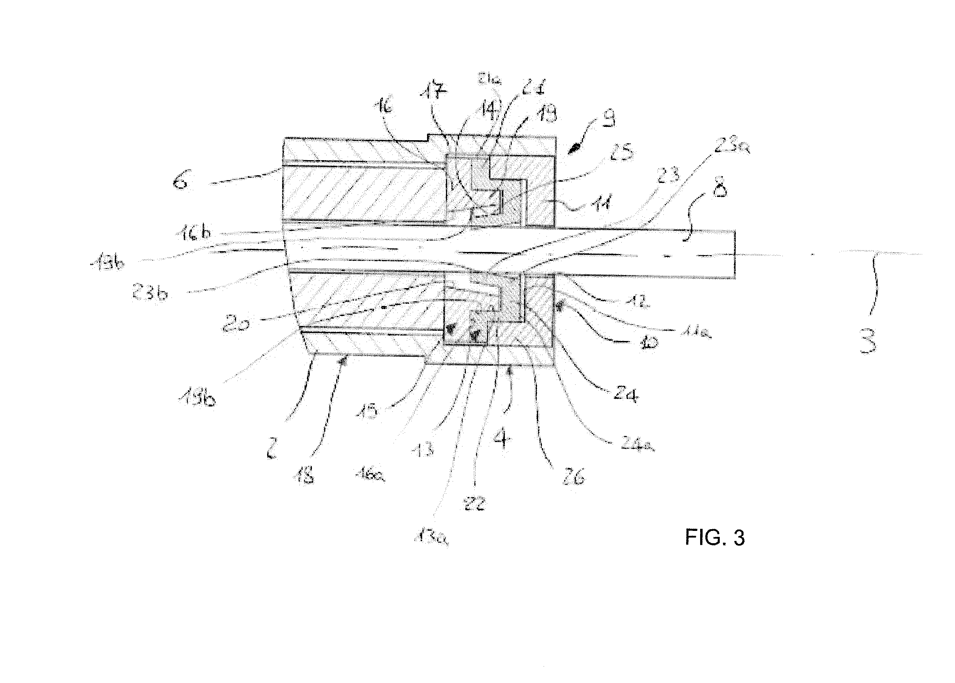

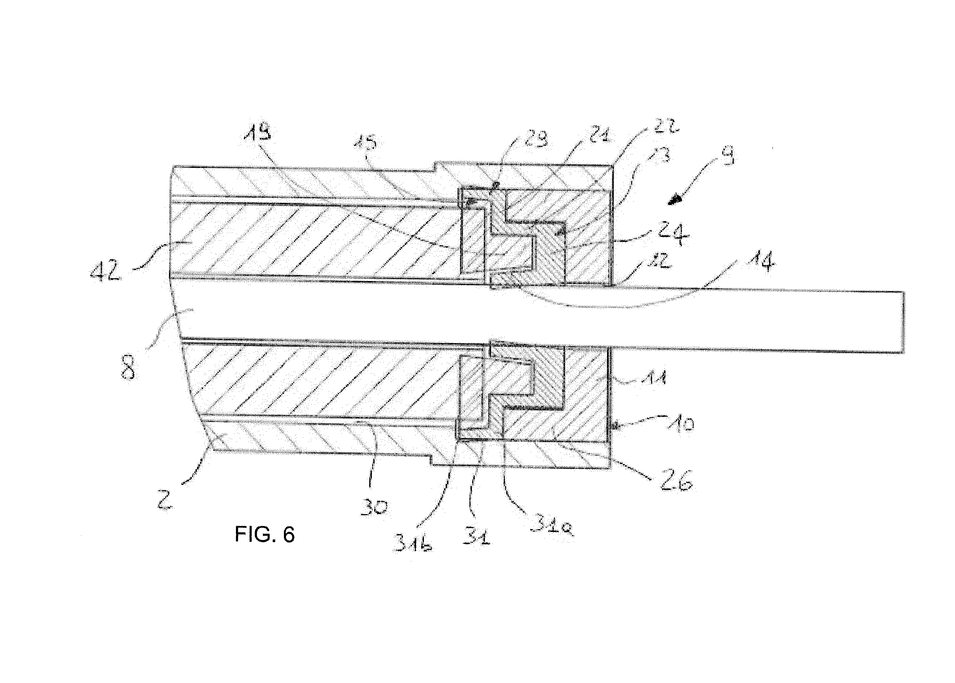

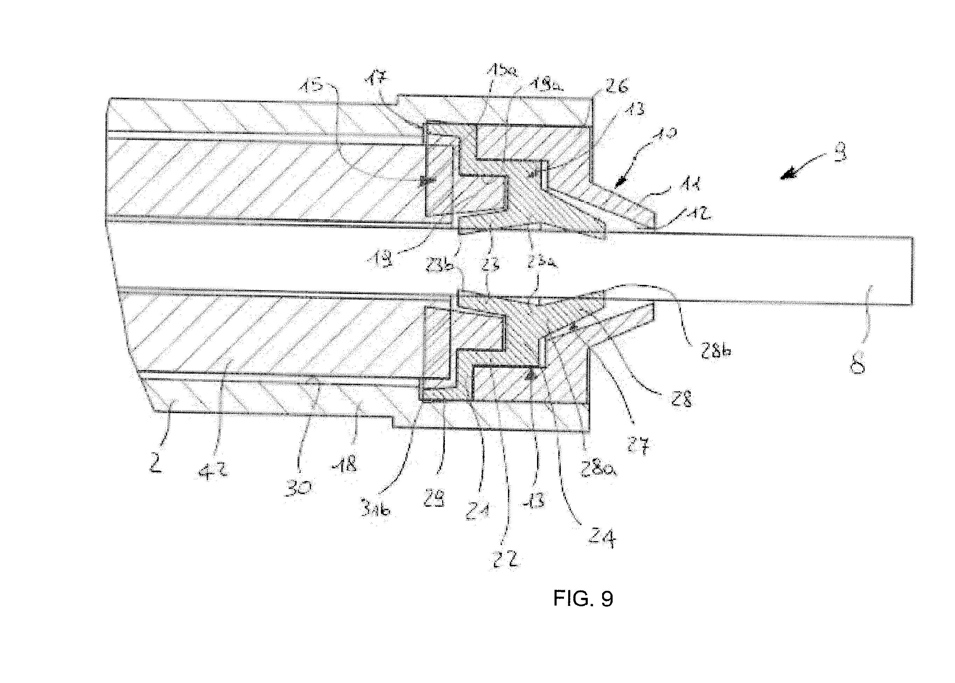

Observing the cross-sections, in particular the cross-section in Figures 3, 6 or 9, it may be seen how the retaining element 15 comprises a thrust portion 19 emerging away from the base portion 16 and towards the sealing gasket 13.

In this way, a central through seat 20 is formed inside, in particular created by the inner surfaces 16b and 19b respectively of the base portion 16 and the thrust portion 19 operating in conjunction with each other. The central through seat 20 may optionally flare out towards the closing element 10, forming a smooth, continuous cone-frustum shaped surface.

The base portion 16 or the thrust portion 19 also comprise respective contact surfaces 16a, 19a designed to receive respective surfaces 13a of the sealing gasket 13 which rest on them, and to press against said surfaces during use.

In particular, the first surface 16a prevents movements in the direction of the longitudinal axis 3, whilst the second contact surface 19a prevents movements of the sealing gasket in a radial direction.

The rod passes through the central through seat 20 which is also designed to at least partly house the active portion 14 of the gasket, allowing its movement. With reference to the structure and geometry of the gasket 13, it should be noticed how this comprises a locking portion 21 which is interposed, in operating conditions, between the closing element 10 and the retaining element 15 so as to form a packed configuration designed to hold the gasket 13 in position, at least along the direction of the longitudinal axis 3, but in general also in the radial direction due to the friction forces generated.

To achieve this aim, the locking portion 21 is usually formed by a disk-shaped annular portion which generically has constant thickness.

In detail, the undercut 17 prevents the retaining portion 15 from moving axially towards the second end portion 5, the gasket locking portion 21 is packed on the respective contact surface 16a and the lateral flange 26 presses the locking portion 21 against the retaining element.

Since the lateral flange 26 is rigidly connected to the housing 2, the compression force generated during the assembly step is maintained in the finished device and compresses the locking portion 21 sandwich-style between the closing element 10 and the retaining element 15, guaranteeing that it will be held in the correct position.

It should be noticed that the gasket comprises a joining portion 22 emerging (in particular at a right angle) in a radially internal position from the locking portion 21. The joining portion 22 (formed by a tubular portion) rests on the contact surface 19a of the thrust portion 19 and the active portion 14 is operatively (indirectly) connected to the joining portion.

There is also a connecting portion 24 designed to join the joining portion 22 to the active portion 14.

The connecting portion 24 emerges radially and at a right angle from the joining portion 22, forming a disk-shaped structure which is hollow inside, allowing the rod 8 to pass through it.

The connecting portion 24, the joining portion 22 and the active portion 14 in conjunction with each other form a substantially "U"-shaped housing cavity 25 designed to receive the thrust portion 19 of the retaining element.

It should be noticed that the tab 14 is not in direct contact with the thrust portion 19, therefore, it can move radially, elastically guaranteeing an optimum fluid-tight seal on the rod.

The active portion 14 of the sealing gasket 13 comprises, in longitudinal section, at least one deformable tab 23 which acts by pressing on the rod.

Said tab comprises a free end 23b which is elastically abutted to the rod 8.

The tab 23, usually formed by a hollow cone-frustum shaped portion extends from a first end 23a positioned a predetermined distance from the rod (normally not zero) to the free end 23b abutted and pressing on the outer surface of the rod 8.

The first end 23a is interposed between the closing element and the free end 23b in such a way as to form a wiper element in the rod extraction condition.

The active portion 14 is housed in the central through seat 20 of the thrust portion 19 of the retaining element 15.

As can been understood, all of the technical features described above are present in all of the embodiments illustrated in the various drawings and therefore are not described any further.

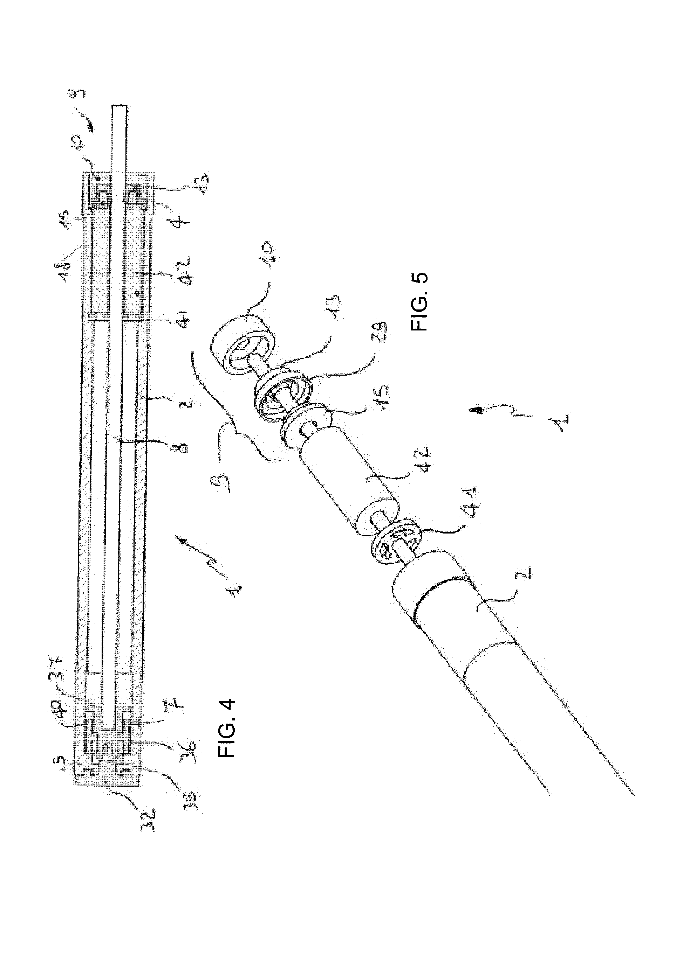

In a first alternative embodiment shown in Figures 4, 5 and 6 the gasket 13 also comprises a sealing lip 29 acting at the inner surface 30 of the housing 2. In detail, the sealing lip 29 emerges from the locking portion 21 in a radially external position and comprises a tab 31 designed in such a way that it is radially external relative to, but substantially symmetrical with the tab 23.

In particular, the tab 31 comprises a first end 31a securely connected (in one piece) to the locking portion 21, and a free second end 31b elastically abutted against the inner surface 30 of the housing.

Finally, the gasket 13 may also comprise a further portion 27 also acting on the rod to prevent the leakage of fluid towards the outside (Figures 7 to 9).

In detail, the further active portion 27 may comprise in longitudinal section at least one tab 28 also extending from a first end 28a located a predetermined distance from the rod 8 to the abutted free end 28b and designed to act by pressing on the rod. The free end 28b is interposed between the closing element 10 and the first end 28a in such a way as to form a configuration which is symmetrical, but opposite to that of the first tab 23.

This configuration allows the wiping of oil on the front part of the rod, further improving the seal.

It is clear that this further tab at the rod, shown in Figures 7 to 9, may also be present in the absence of the sealing lip 29 illustrated.

Finally, it should be noticed that both the retaining element and the closing element are usually made of rigid material, whilst the gasket is obviously made of rubber or a similar deformable material.

To conclude, the damper comprises one or more sponges 42 associated with the rod and positioned in the sliding seat in damper operating conditions and a pierced disk 41 designed to allow the passage of oil and to lock the sponge or sponges in position.

These elements are of the known type and therefore are not described in further detail.

The invention brings important advantages.

The particular configuration of the sealing device allows the prevention of oil leaks to the outside and therefore guarantees the lasting operating life of the damper.

The packed configuration of the gasket together with the presence of at least one and usually more sealing lips improve and guarantee optimum operation of the damper, even in the event of geometric imperfections or incorrect welding of the components which could vice versa result in a probable oil leak.

## Claims

1. A damper for damping the opening and closing actions of sliding elements of pieces of furniture, such as wings or drawers, comprising:
- a housing (2) extending along a longitudinal axis (3) between a first end portion and a second end portion (4, 5), the housing comprising a tubular sliding seat (6);
- a predetermined quantity of a liquid, such as oil, for example silicone oil, positioned inside the tubular sliding seat (6);
- at least one piston (7) able to slide in the seat, for dividing the housing (2) into two sub-chambers, during the movement from the first end portion (4) to the second end portion (5) the transit openings between the two half-chambers being mainly blocked to slow the passage of the liquid and to create a damping effect, and during the motion from the second end portion (5) to the first end portion (4) the transit openings being mainly open to allow the facilitated passage of the liquid and to allow more rapid rearming of the damper;
- a rod (8) substantially fixed to the piston (7) during its sliding motion in the seat (6), the rod (8) at least partly coming out of the first end portion (4) of the housing;
- at least one sponge (42) housed in the housing (2) at the second end portion (4), said at least one sponge being in particular hollow to allow the sliding transit of the rod (8) inside it, the sponge (42) compensating for changes in the internal volume caused by the motion of the rod (8) into/out of the seat;
- at least one pierced disk (41) housed in the housing (2) at the first end portion (4) and designed to allow the passage of oil and to hold in position said at least one sponge (42), the sponge (42) being interposed between the disk (41) and the first end portion (4);
- a sealing device (9) prepared for sealing the sliding seat (6) at the first end portion (4) of the housing (2) to prevent fluid from leaking from the inside of the sliding seat to the outside, the sealing device (9) comprising:
- at least one closing element (10) having a head (11) with a central seat (12) designed to house and allow the passage of the rod (8) and a lateral flange (26) connected to the head (11) and irremovably and with a fluid-tight seal coupled at the first end portion (4) of the housing (2);
- at least one sealing gasket (13), positioned in the housing (2) and equipped with a portion (14) acting on the rod (8) for preventing fluid from leaking to the outside, the active portion (14) being elastically abutted to the rod (8) and designed in longitudinal section to have a tab shape with its axis set at an angle to the axis of the rod (8), a base end (23a) of the tab being distanced from the rod (8); and
- a retaining element (15) operating in conjunction with the housing (2), in particular directly operating in conjunction with the inner surface of the housing (2), and acting on the sealing gasket (13) to hold it in the operating position, the sealing gasket (13) also comprising a locking portion (21) interposed, in operating conditions, between the closing element (10) and the retaining element (15) in such a way as to form a packed configuration designed to hold in position, at least along the direction of the longitudinal axis (3), the sealing gasket (13), the locking portion (21) being formed by a disk-shaped portion, optionally having constant thickness, an outer lateral surface (21a) of the disk-shaped locking portion (15) acting directly on the inner lateral surface of the housing (2) to prevent oil leakage.

2. The damper according to the foregoing claim, wherein the retaining element (15) comprises a base (16) designed to operate in conjunction with a corresponding undercut (17) of the damper positioned inside the tubular sliding seat (6) and associated with the housing (2) for determining a resting condition and preventing a translation of the retaining element (15) from the first end portion (4) towards the second end portion (5), the base (16) comprising a substantially flat annular surface facing towards the second end portion (5) designed to form a resting and contact surface for the sponge (42), the base being hollow at the centre, distanced from and not in contact with the rod (8).

3. The damper according to any of the foregoing claims, wherein the housing (2) comprises, at the first end portion (4), a first cross-section whose area is greater than a second cross-section relating to a zone (18) consecutive to and following the first end portion (4) towards the second end portion (5), said difference in cross-section forming the above-mentioned undercut (17), the first cross-section having an area equal to the area of the housing (2) infeed opening in the first end portion (4), the first cross-section with the greater area having a cylindrical internal shape, from the mouth of the housing (2) to the undercut (17).

4. The damper according to claim 2, wherein the retaining element (15) comprises a thrust portion (19) emerging away from the base portion (16), at least the base portion (16) and/or the thrust portion (19) comprising a contact surface (16a, 19a) designed to press, in operating conditions, against a respective contact surface (13a) of the sealing portion (13), the base portion (16) having a substantially cylindrical extension, forming a disk-shaped portion and comprising a central through seat (20) designed to allow the passage of the rod (8) and distanced from the rod, the thrust portion (19) emerging from a central zone of the base portion (16) and towards the first end portion (4), the central through seat (20) being formed by the inner surfaces (16b, 19b) of the base portion (16) and the thrust portion (19) operating in conjunction with each other, and being flared towards the closing element (10), the central through seat (20) optionally and mainly having a conical shape which opens up towards the first end portion (4).

5. The damper according to any of the foregoing claims, wherein the lateral flange (26) connected to the head (11) comprises a circular lateral surface facing towards and irremovably and with a fluid-tight seal coupled, along substantially the entire extension, to the inner surface of the housing (2), for example by welding or gluing.

6. The damper according to any of the foregoing claims, wherein the gasket (13) comprises the locking portion (21) resting on the contact surface (16a) of the base portion (16) of the retaining element (15) and a joining portion (22) having a cylindrical tubular shape emerging in a radially internal position of the locking portion (21) and resting on the contact surface (19a) of the thrust portion (19) of the retaining element (15), the active portion (14) of the gasket (13) being operatively connected to the joining portion (22).

7. The damper according to any of the foregoing claims, wherein the active portion (14) of the gasket (13) comprises, in longitudinal section, at least one deformable tab (23) designed to act by applying pressure on the rod and comprising a free end (23b) elastically abutted to the rod (8), the tab (23) extending from a first end (23a) located a predetermined distance from the rod (8) to the abutted free end (23b), the first end (23a) being interposed between the closing element (10) and the free end (23b), the active portion (14) being housed in the central through seat (20) of the thrust portion (19) of the retaining element (15) and being distanced from and not in contact with the thrust portion (19).

8. The damper according to claim 6, wherein the gasket (13) comprises a connecting portion (24) having a disk shape with the axis parallel with the longitudinal axis (3) of extension of the housing (2) for joining one end portion of the joining portion (22) facing towards the first end portion to the first end (23a) of the active portion (14), the connecting portion (24) emerging radially, substantially at a right angle, from the joining portion (22), the connecting portion (24), the joining portion (22) and the active portion (14) forming, in conjunction with each other, a "U"-shaped housing cavity (25) designed to receive a thrust portion (19) of the retaining element (15).

9. The damper according to any of the foregoing claims, wherein the closing element (10) comprises a lateral flange (26) emerging perimetrically from the head (11) and housed in and connected to the housing (2), the lateral flange (26) at least partly surrounding the gasket (13), a distal portion of the flange (26) opposite the head (11) being radially superposed on the thrust portion (19) of the retaining element (15), a section of the joining portion (15) of the sealing gasket (13) being interposed between the lateral flange (26) and the thrust portion (19).

10. The damper according to any of the foregoing claims, wherein the connecting portion (24) comprises a flat upper surface (24a) facing towards the head (11) of the closing element (10), said upper surface (24a) being slightly distanced from a flat lower surface (11a) of the head opposite, and in particular parallel with, the flat upper surface of the connecting portion (24).

11. The damper according to any of the foregoing claims, wherein the connecting portion (24) also comprises a sealing projection (39) having an annular shape emerging from the flat upper surface (24a), the sealing projection (39) being designed to make contact under pressure with the flat lower surface of the head (11), the distance between the upper surface of the connecting portion (24) and the flat lower surface of the head (11) allowing correct crushing of the annular sealing projection on the flat lower surface of the head (11) for guaranteeing a further seal against oil leaks.
